Europäisches Patentamt

European Patent Office

Office européen des brevets

(19)

(11) Veröffentlichungsnummer: **0 283 755 B1**

(12) **EUROPÄISCHE PATENTSCHRIFT**

(45) Veröffentlichungstag der Patentschrift: 08.05.91

(51) Int. Cl.⁵: **F04C 2/12**, A01C 23/00

(21) Anmeldenummer: 88102809.6

(22) Anmeldetag: 25.02.88

(54) **Vorrichtung zum Verteilen von inhomogenen Flüssigkeiten, insbesondere Gülle.**

(30) Priorität: 26.03.87 DE 3709912

(43) Veröffentlichungstag der Anmeldung:
28.09.88 Patentblatt 88/39

(45) Bekanntmachung des Hinweises auf die
Patenterteilung:
08.05.91 Patentblatt 91/19

(84) Benannte Vertragsstaaten:
BE CH DE FR GB LI NL SE

(56) Entgegenhaltungen:
EP-A- 0 016 499          EP-A- 0 170 039
DE-A- 1 807 392          DE-A- 2 819 041
FR-A- 2 077 240          GB-A- 781 240
US-A- 2 439 427          US-A- 2 672 823

(73) Patentinhaber: **Hugo Vogelsang Fass- und Maschinenbau GmbH**

**W-4572 Essen(DE)**

(72) Erfinder: **Deyen, Heinz**
**Ketteler Strasse 2**
**W-4595 Lastrup(DE)**
Erfinder: **Verhülsdonk, Burkhard, Dipl.-Ing.**
**Löninger Strasse 18**
**W-4571 Bunnen(DE)**

(74) Vertreter: **Busse & Busse Patentanwälte**
**Postfach 1226 Grosshandelsring 6**
**W-4500 Osnabrück(DE)**

## Beschreibung

Die Erfindung betrifft eine Vorrichtung zum Verteilen von inhomogenen Flüssigkeiten, insbesondere Gülle, nach dem Oberbegriff des Patentanspruchs 1.

Verteilervorrichtungen dieser Art werden in erster Linie zum Ausbringen von Gülle auf landwirtschaftlichen Nutzflächen verwendet, können jedoch auch zum Verteilen anderer inhomogener Flüssigkeiten, z.B. von Flüssigfutter in landwirtschaftlichen Tierhaltungen, benutzt werden.

Zur Erzeugung von Einzelströmen der zugeführten Flüssigkeit ist bei den bekannten Verteilervorrichtungen der Verteilerbehälter als Beruhigungsraum ausgebildet und mit einer Anzahl gleichgroßer Öffnungen versehen. Voraussetzung für eine gleichmäßige Aufteilung des zugeführten Flüssigkeitsstroms ist hierbei neben einem gleichen Öffnungsquerschnitt eine gleiche Druckdifferenz an jeder Austrittsöffnung. Während ein gleichgroßer Öffnungsquerschnitt problemlos zu verwirklichen ist, bereitet die zweite Bedingung bei inhomogenen Flüssigkeiten, insbesondere bei Gülle, erhebliche Schwierigkeiten, da in Abhängigkeit von der Länge und der Form der nachfolgenden Strömungsführungen ein ungleichmäßiger Strömungswiderstand einen nachteiligen Einfluß auf dis Verteilungsgüte nimmt. Besondere Probleme bereiten Fremdkörper, die zu Verstopfungen in einzelnen Strömungskanälen führen können, wobei dann über die offenen Strömungskanäle entsprechend erhöhte ?lüssigkeitsmengen ausgetragen werden.

Um hier Abhilfe zu schaffen, ist bereits durch EP-A-0 170 039 eine Verteilervorrichtung für inhomogene Flüssigkeiten, insbesondere Gülle, mit einem Verteilorgan bekannt geworden, bei dem der Veteilerbehälter ein durch Zwischenwände in mehrere voneinander getrennte, jeweils ein Drehkolbenpaar nach Art von Roots-Rotoren enthaltende Förderräume unterteiltes Gehäuse umfaßt und sämtliche Förderräume auf ihrer Flüssigkeitszuführseite miteinander in offener Verbindung stehen sowie auf ihrer Flüssigkeitsaustrittsseite jeweils mit einem gesonderten Aus laß versehen sind. Hierdurch erfolgt eine Aufteilung der zugeführten Flüssigkeit in mehrere Einelströme, bei denen ein unterschiedliches Druckniveau, das z.B. durch Unterschiede in der Länge, dem Durchmesser und der Form der Austragleitungen bzw. nachfolgenden Strömungsführungen hervorgerufen werden kann, ohne einen nennenswerten Einf luß auf die Verteilungsgüte bleibt, da die Drehkolbenpaare zwangläufig die vorgegebenen Teilmengen fördern. Die nach Art von Roots-Rotoren arbeitenden Drehkolbenpaare führen dabei zu einer weitgehenden Unempfindlichkeit der Verteilervorrichtung gegenüber Verstopfungen, da selbst größere Fremdkörper durch den Zwangsumlauf der paarweise zusammenwirkenden Drehkolben durch die Förderräume hindurchgeführt werden.

Im Zusammenhang mit dem Ausbringen von Gülle auf Ackerflächen erweist sich jedoch die begrenzte Anzahl von Auslässen, die aufgrund der Gesamtlänge der nebeneinanderliegenden Drehkolbenpaare noch mit angemessenem Fertigungsaufwand zu realisieren sind, in Abhängigkeit von den auszutragenden Güllemengen als Beschränkung für einen vorgegebenen Einsatz der Verteilervorrichtung. Dabei kann sich insbesondere zeigen, daß das Fördervolumen einer der auszutragenden Gülle angepaßten Baugröße, bei der zur Berücksichtigung der Größe der enthaltenen Fremdkörper die kleinste Längserstreckung des jeweiligen Förderraums in Axialrichtung des Drehkolbenpaars etwa 50 mm betragen sollte, zu groß ist, um auf der Ackerfläche die vorgegebenen, geringen Güllemengen ordnungsgemäß ausbringen zu können. Zu berücksichtigen ist dabei auch, daß mit einer normalen Fahrgeschwindigkeit des Gülleausbringgerätes von ca. 5 km/h gerechnet werden muß, die sich auf der Ackerfläche kaum erhöhen läßt, um etwa auf diese Weise eine Verringerung der flächenbezogenen Ausbringmengen an Gülle bei einer vorgegebenen Förderleistung der Verteilervorrichtung zu erreichen.

Der Erfindung liegt daher die Aufgabe zugrunde, eine Vorrichtung zum Verteilen von inhomogenen Flüssigkeiten, insbesondere Gülle, zu schaffen, bei der unter Erhalt einer gleichmäßigen Verteilung der zugeführten Flüssigkeit auf mehrere Einzelströme und einer weitgehenden Umempfindlichkeit gegen Druckunterschiede zwischen den Einzelströmen sowie gegen Verstopfungen durch Fremdkörper u. dgl. Verunreinigungen die Ausbringmenge der Flüssigkeit pro Einzelstrom im Rahmen der auslegungsgemäßen Grenzen der Vorrichtung wesentlich herabgesetzt ist.

Diese Aufgabe wird nach der Erfindung durch eine Ausgestaltung der Vorrichtung gemäß dem Patentanspruch 1 gelöst. Wie es grundsätzlich bekannt ist, erfolgt bei nach dem Prinzip von Roots-Rotoren umlaufenden Drehkolbenpaaren die Förderung der zugeführten Flüssigkeit durch den Transport des zwiscnen den Kolbenflügeln der üblicherweise 8-förmigen Kolben und dem diese umgebenden Genäuse eingeschlossenen Volumens von der Flüssigkeitszuführ- bzw. Saugseite zur Flüssigkeitsaustritts- bzw. Druckseite des Drehkolbenpaares. Die Tatsache, daß bei jeder Umdrehung des Drehkolbenpaares abwechselnd der eine und der andere Drehkolben die Förderung übernimmt, die zur Saugseite einströmende Flüssigkeit also in zwei gleiche Förderströme aufgeteilt wird, nutzt die Erfindung zur Problemlösung aus. Denn die beiden auf dem Weg durch den jeweiligen Förderraum getrennten Flüssigkeitsströme werden erfindungsgemäß auf der Druckseite nicht wieder vereinigt, sondern werden in jedem Förderraum zwei voneinander getrennten Auslaßkanalen zugeführt, die im Umlaufbetrieb des Drehkolbenpaares durch ihre zugehörigen, umlaufenden Drehkolben abwechselnd jeweils vom Förderraum abgetrennt und mit diesem verbunden werden. Auf diese Weise wird im Betrieb der Vorrichtung die über jeden Auslaßkanal aus dem zugehörigen Förderraum herausgeförderte und in die jeweilige Austragleitung eingespeiste Flüssigkeitsmenge gegenüber bekannten Vorrichtungen um die Hälfte verringert. Dies bietet die Voraussetzung dafür, daß unter Zugrundelegung einer normalen Fahrgeschwindigkeit des Gülleaustraggerätes auf der Ackerfläche vorgegebene, geringe Güllemengen pro Flächeneinheit aufgebracht werden können, um auf diese Weise einer Überdüngung und damit einhergehenden Bodenverunreinigung entgegenzuwirken. Zugleich besitzt die erfindungsgemäße Verteilervorrichtung die insbesondere beim Ausbringen von Gülle erforderliche Unempfindlichkeit gegen Druckunterschiede zwischen den Einzelströmen sowie gegen Verstopfungen durch Fremdkörper u. dgl. aufgrund des angewandten Verdrängungsprinzips der nach Art von Roots-Rotoren arbeitenden Drehkolbenpaare in den einzelnen Förderraumen.

US-A-2 672 823 beschreibt eine Drehpumpe mit zwei im Pumpengehäuse zusammenwirkenden Drehkolben, wobei das Pumpengehäuse mit zwei einander gegenüberliegenden Öffnungen versehen ist, die über Zwischenkanäle mit einem in das Gehäuseinnere führenden zentralen unteren Verbindungskanal verbunden sind. Im oberen Bereich des Pumpengehäuses zwischen den beiden einander gegenüberliegenden Öffnungen ist ein weiterer Kanal gebildet, der seinerseits in das Innere des Pumpengehäuses führt. Je nach der Drehrichtung der Kolben wirkt der untere Verbindungskanal entweder als Einlaß oder als Auslaß. Bei einer mit der Verteilervorrichtung nach der Erfindung zu vergleichenden Betriebsweise der Pumpe gemäß US-A-2 672 823 bei der der untere Verbindungskanal als Auslaß wirkt, nimmt dieser die gesamte durch den sodann den Einlaß bildenden oberen Kanal eingespeiste Fördermenge aus dem Förderraum auf und verteilt die Fördermenge auf die beiden einander gegenüberliegenden Auslaßöffnungen. Der Auslaß ist somit von dem zentralen, unteren Verbindungskanal gebildet, in den beide Drehkolben der bekannten Pumpe hineinfördern und in dem erst abströmungsseitig eine Verteilung der Fördermenge auf die beiden einander gegenüberliegenden Auslässe vorgenommen wird. Während somit bei der Verteilervorrichtung nach der Erfindung im Umlaufbetrieb des Drehkolbenpaares die beiden Auslaßkanäle durch ihre zugehörigen, umlaufenden Drehkolben abwechseld jeweils vom Förderraum abtrennbar und mit diesem verbindbar sind, derart, daß die Drehkolben jedes Förderraums abwechselnd die Förderung der Flüssigkeit übernehmen, und zwar jeweils nur in einen der beiden Auslaßkanäle, wobei die Förderung durch den jeweils anderen Auslaßkanal praktisch unterbrochen ist, ist im Umlaufbetrieb des Drehkolbenpaares gemäß US-A-2 672 823 eine solche Abtrennung der Auslaßkanäle vom Förderraum durch die umlaufenden Drehkolben nicht möglich. Vielmehr fördern in dem bekannten Fall stets beide umlaufenden Drehkolben gemeinsam in den zentralen, als Auslaß wirkenden Verbindungskanal, und erst in diesem findet eine Verzweigung auf die beiden einzelnen, einander gegenüberliegenden Auslaßöffnungen statt.

Um auch größeren Fremdkörpern Rechnung zu tragen, die insbesondere in Gülle enthalten sein können, ist eine Ausgestaltung der Drehkolbenpaare vorteilhaft, bei der die Drehkolben mit einem elastischen Mantel versehen sind. Hierdurch wird eine Förderung der Flüssigkeit ohne Blockieren selbst bei größeren Fremdkörpern weiter begünstigt. Einer Verstopfung der Auslaßkanäle bzw. der an diese angeschlossene Austragleitungen durch Fremdkörper bzw. Feststoffe wirkt außerdem die im Betrieb der erfindungsgemäßen Vorrichtung auftretende wechselseite Beaufschlagung der beiden Auslaßkanäle jedes Förderraums entgegen, die eine pulsartige Strömung in den Austragleitungen erzeugt. Die Pulsfrequenz beträgt im Normalfall bei 8-förmigen, 2-flügeligen Drehkolben bis zu 18 Hz. Diese Frequenz ist so hoch, daß eine quasi-kontinuierliche Strömung in den Austragleitungen gewährleistet ist. Bei der angenommenen Normalgeschwindigkeit eines Gülleaustragfahrzeugs von etwa 5 km/h beträgt der Abstand der Flüssigkeitspulse normalerweise weniger als 100 mm.

Weitere Merkmale und Vorteile der Erfindung ergeben sich aus den Ansprüchen und der nachstehenden "Beschreibung in Verbindung mit der Zeichnung, in der zwei Ausführungsbeispiele des Gegenstands der Erfindung schematisch veranschaulicht sind. In der Zeichnung zeigen:

Fig. 1 ein erstes Ausführungsbeispiel einer Vorrichtung zum Verteilen von inhomogenen Flüssigkeiten, insbesondere Gülle in einem Vertikalschnitt,

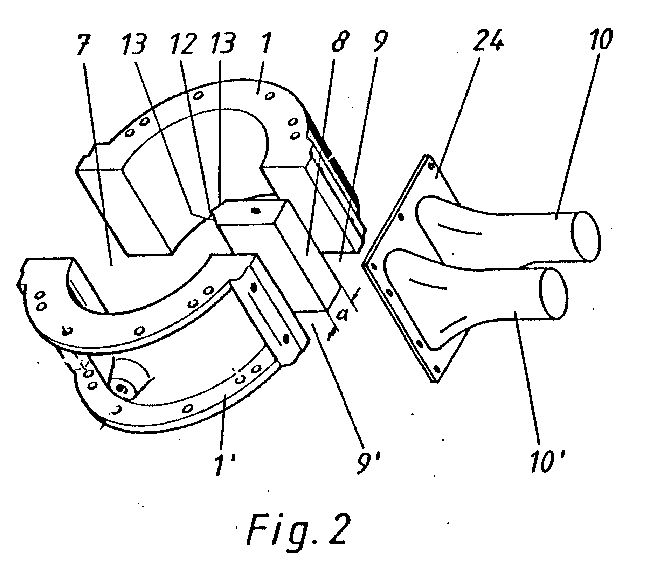

Fig. 2 eine Einzelheit der Fig. 1 in vergrößerter perspektivischer Explosivdarstellung,

Fig. 3 u. 4 Schnittdarstellungen entsprechend Fig. 1 zur Veranschaulichung unterschiedlicher Winkelstellungen der Drehkolben eines Drehkolbenpaares,

Fig. 5     eine Schnittdarstellung entsprechend Fig. 1 zur Veranschaulichung einer Abwandlung der Drehkolben und

Fig. 6     eine teilweise geschnittene Ansicht der Vorrichtung in Richtung des Pfeils A der Fig. 1.

Die in der Zeichnung dargestellte Verteilervorrichtung weist einen Verteilerbehälter auf, der zwei Gehäusehalbschalen 1,1' mit kreisbogenförmiger Umfangswand umfaßt. In den beiden Gehäusehalbschalen 1,1' drehen sich zwei auf je einer Welle 2,2' befestigte Drehkolben 3,3' eines zusammenwirkenden Drehkolbenpaares gegenläufig und fördern während ihrer Drehung die über einen Ansaugstutzen bzw. ein Zuführrohr 4 dem Verteilerbehälter zugeführte Flüssigkeit von der Saug- bzw. Flüssigkeitszuführseite 5 zur Druck- bzw. Flüssigkeitsaustrittsseite 6 eines von den Gehäusehalbschalen 1,1' gemeinsam mit stirnseiten Abschlüssen definierten Förderraums 7.

Die Drehkolben 3,3' sind nach Art von Roots-Rotoren mit der dargestellten zweiflügeligen, 8-förmigen Ausbildung ausgeführt. Bei dieser Ausbildung wird während jeder Kolbenumdrehung zweimal ein zwischen Drehkolben 1,1' und Gehäusehalbschale 1,1' eingeschlossenes Volumen gefördert, und zwar mit einer Phasenverschiebung um 90° abwechselnd von dem oberen und dem unteren Drehkolben 3 bzw. 3'. Die Gehäusehalbschalen 1,1' besitzen hierbei die bei Roots-Gebläsen oder -Drehkolbenpumpen typische Querschnittsform mit kreisbogenförmiger Ausgestaltung ihrer Umfangswände entsprechend den äußeren Umlaufbahnen der Drehkolben 3,3'.

Die Flüssigkeitsaustrittsseite 6 des Förderraums 7 weist einen Auslaß auf, der durch einen Sperrkörper 8 in zwei einzelne Auslaßkanäle 9,9' unterteilt ist, an die jeweils ein Druckstutzen 10,10' angeflanscht werden kann. Die voneinander getrennten Auslaßkanäle 9,9' sind jeweils einem der beiden zusammenwirkenden Drehkolben 3,3' des Drehkolbenpaares ihres Förderraums 7 zugeordnet. Im Umlaufbetrieb des Drehkolbenpaares 3,3' werden die beiden Auslaßkanäle 9,9' durch ihre zugehörigen, umlaufenden Drehkolben 3,3' abwechselnd jeweils vom Förderraum 7 abgetrennt und mit diesem verbunden. Durch die in dieser Weise mit Hilfe des Sperrkörpers 8 bewirkte Ausbildung der beiden gesonderten Austrittskanäle 9,9' wird erreicht, daß das zwischen der oberen Gehäusehalbschale 1 und dem oberen drehkolben 3 geförderte Volumen überwiegend in den oberen Auslaßkanal 9 gedrückt wird, während das zwischen der unteren Gehäusehalbschle 1' und dem unteren Drehkolben 3' geförderte Volumen überwiegend durch den unteren Auslaßkanal 9' den Verteilerbehälter verläßt.

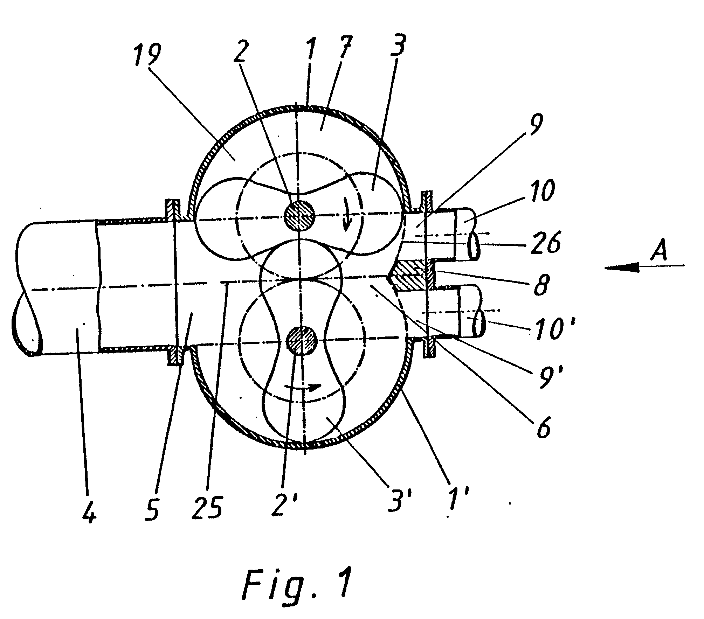

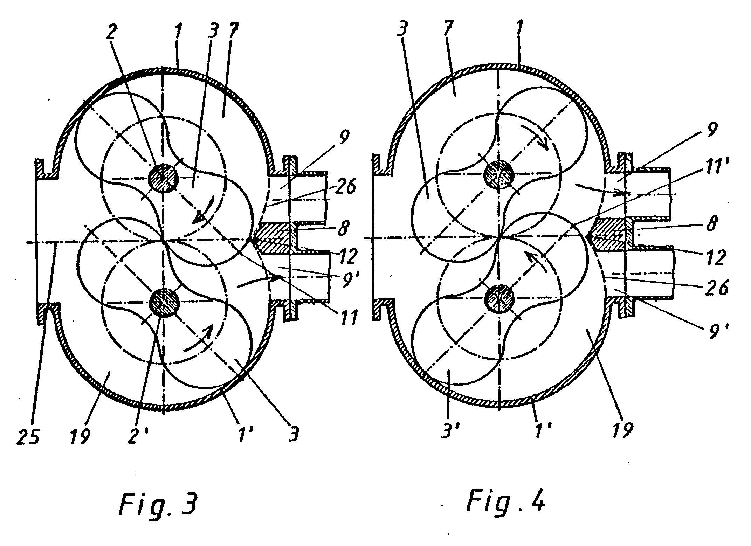

Die Fig. 1 zeigt eine Stellung der Drehkolben 3, 3', bei der die Förderung dudrch den unteren Auslaßkanal 9' gerade beginnt, während gemäß der Darstellung in Fig. 3 die Drehung der Drehkolben 3,3' gegenüber der Momentanstellung nach Fig. 1 um 45° fortgeschritten ist, wobei in etwa die Förderung der Flüssigkeit durch den unteren Auslaßkanal 9' ein Maximum erreicht. Die Fig. 4 wiederum veranschaulicht eine Momentanstellung der Drehkolben 3,3' die gegenüber dem Momentanzustand nach Fig. 3 um 90° fortgeschritten ist, wobei in etwa die Flüssigkeitsförderung durch den oberen Auslaßkanal 9 ihr Maximum erreicht.

In jeder Stellung der Drehkolben 3,3' wird eine möglichst gute Trennung zwischen den beiden Flüssigkeitsströmen angestrebt, die über die Auslaßkanäle 9,9' den Verteilerbehälter verlassen. Hierzu weist die dem Förderraum 7 zugewandte Oberfläche des Sperrkörpers 8 die Form eines Zwickels auf, dessen Scheitellinie 12 in der bei 25 strichpunktiert angedeuteten Symmetrieebene des Drehkolbenpaares angeordnet ist und dessen von der Scheitellinie 12 seitlich ausgehende Flächen 13 bogenförmig entsprechend den sich schneidenden Kopfkreislinien 26 der Drehkolben 3,3' ausgebildet sind. Die Auslaßkanäle 9,9' liegen dabei in gleichen Abständen beidseits der Symmetrieebene 25.

Die in Achsrichtung des Drehkolbenpaares 3,3' gemessene Länge des Sperrkörpers 8 ist gleich der axialen Länge der Drehkolben 3,3', und das von dem Sperrkörper 8 ausgefüllte Abstandsmaß a zwischen den beiden Auslaßkanälen 9,9' ist höchstens so groß bemessen, daß in jedem Auslaßkanal 9,9' ein freier Innendurchmesser von zumindest etwa 30 mm verbleibt. Engere Kanalquerschnitte würden insbesondere beim Ausbringen von Gülle zu Verstopfungen neigen.

Bei der 8-förmigen Ausführung der Drehkolben 3,3', wie sie insbesondere aus den Fig. 1, 3 und 4 ersichtlich ist, zeigt sich, daß während der Kolbendrehung von einer Position, in der die jeweilige Kopflinie 11' des unteren Drehkolbens 3' die Scheitellinie 12 des Sperrkörpers 8 soeben verlassen hat (Fig. 4), über die in Fig. 1 dargestellte Position bis zu einer Position, in der die betreffende Kopflinie 11 des oberen Drehkolbens 3 die Scheitellinie 12 des Sperrkörpers 8 wieder überstreicht (Fig.3), eine Verbindung zwischen dem oberen Auslaßkanal 9 und dem unteren Auslaßkanal 9' besteht und somit insbesondere im falle etwaiger Druckunterschiede zwischen dem oberen Auslaßkanal 9 und dem unteren Auslaßkanal 9' eine teilweise Vermischung beider Flüssigkeitsströme stattfinden kann. Versuche haben jedoch erwiesen, daß bei den in der Regel geringen Druckunterschieden, die sich beim Einsatz der Verteilervorrichtung zur Ausbringung von Gülle einstellen, nur vernachlässigbar geringe Fördermengenunterschiede zwischen dem Flüssigkeitsstrom des oberen Auslaßstutzens 10 und dem des unteren Auslaßstutzens 10' auftreten.

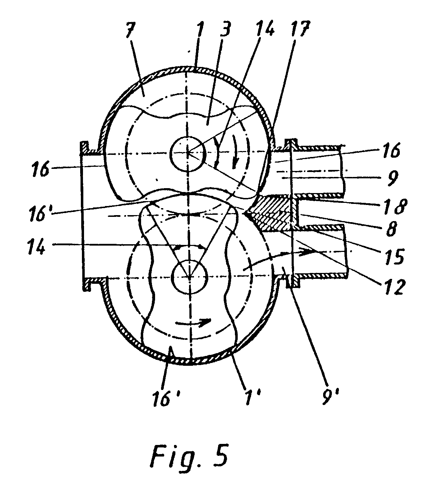

Bei einer Ausbildung der Drehkolben 3,3' gemäß Fig. 5 läßt sich jedoch eine solche Vermischung der Einzelströme der geförderten Flüssigkeit praktisch vollständig vermeiden. Bei der Ausgestaltung gemäß Fig. 5 ist die Kopflinie 11,11' der 8-förmigen Drehkolben gem. Fig. 1 durch eine Ausbildung jedes Kolbenflügels mit einer Kopffläche 16,16' ersetzt, die in Umfangsrichtung über einen Winkelbereich 14 bogenförmig entsprechend der bogenförmigen Innenkontur der Gehäusehalbschalen 1,1' ausgebildet ist. Die Bogenlänge der Kopffläche 16,16' ist so bemessen, daß bei einer 90°-Stellung der beiden Drehkolben 3,3' der eine Auslaßkanal 9,9' in freier Strömungsverbindung mit dem Förderraum 7 steht, während der andere Auslaßkanal 9' bzw. 9 von der jeweils angrenzenden Kopffläche 16' bzw. 16 des ihm zugewandten Kolbenkopfes vollständig vom Förderraum 7 abgetrennt ist. In der Praxis beträgt dabei die Bogenlänge der Kopffläche 16,16' etwa das Doppelte des Durchmessers jedes Auslaßkanals 9,9'.

Aus der in Fig. 5 gezeigten Momentanstellung der Drehkolben 3,3' ist demgemäß ersichtlich, daß bis zu dem Zeitpunkt, in dem die nachlaufende Randlinie 15 der oberen Kopffläche 16' des unteren Drehkolbens 3' über die Scheitellinie 12 des Sperrkörpers 8 hinwegwandert, durch die Kopffläche 16' des unteren Drehkolbens 3' eine Trennung zwischen dem oberen Auslaßkanal 9 und dem unteren Auslaßkanal 9' erreicht ist, während unmittelbar danach dadurch, daß die vorauslaufende Randlinie 17 der Kopffläche 16 des oberen Drehkolbens 3 über die zwickelseitige Randkante 18 des Sperrkörpers 8 hinwegläuft, diese Trennung von der rechten Kopffläche 16 des oberen Drehkolbens 3 vorgenommen wird.

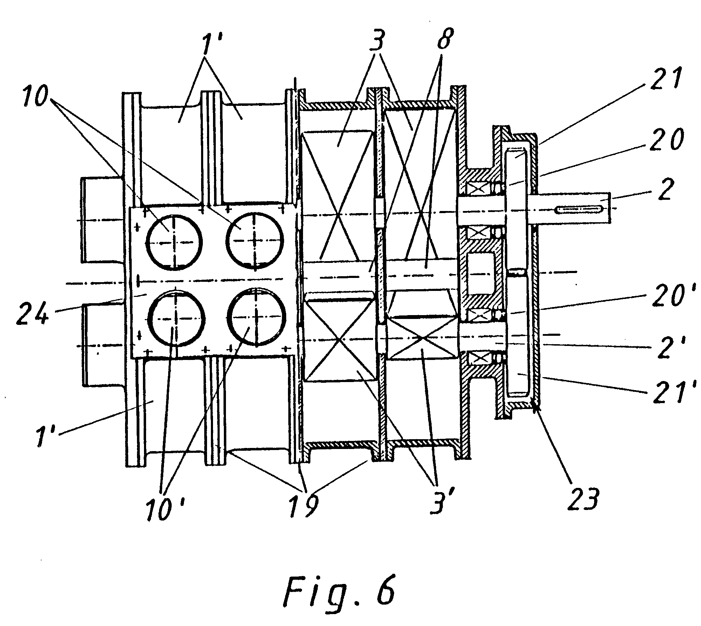

In Fig. 6 ist in einem halben Horizontalschnitt als Anwendungsbeispiel die Verteilervorrichtung mit vier in paralleler Anordnung zum Verteilerbehälter zusammengeschlossenen Einzelbehältern veranschaulicht, um auf diese Weise acht gleiche Förderströme der Flüssigkeit zu erzeugen.

Zwischen jeweils zwei Gehäusehalbschalen 1,1' eines Einzelbehälters befindet sich eine Zwischenplatte 19, die die Einzelbehälter voneinander trennt. Die Außenseiten der beiden äußeren Gehäusehalbschalenpaare 1,1' sind durch Stirnwände geschlossen. Die Drehkolben 3,3' sind drehfest mit den Wellen 2,2' verbunden, die, auf der linken Seite der Fig. 6 nicht sichtbar, beidseitig in Lagern 20,20' gelagert sind und mittels zweier Gleichlaufzahnräder 21,21' eines Gleichlaufgetriebes 23 in ihrer Drehung gegenläufig synchronisiert sind. Mit Hilfe von Dichtungen wird das Öl des Gleichlaufgetriebes 23 vom Fördermedium des nächstgelegenen Einzelbehälters getrennt.

Die Auslaßstutzen 10,10' sämtlicher Einzelbehälter sind zweckmäßig auf einer einzigen Flanschplatte 24 angeordnet, an der auch die Sperrkörper 8 in nicht näher dargestellter Weise befestigt sind. Die Flanschplatte 24 überdeckt die Auslaßkanäle 9,9' sämtlicher Einzelbehälter mit ihren jeweiligen Gehäusehalbschalen 1,1'. Durch Abnahme der Flanschplatte 24 können sämtliche Förderräume 7 des Verteilerbehälters inspiziert werden.

## Ansprüche

1. Vorrichtung zum Verteilen von inhomogenen Flüssigkeiten, insbesondere Gülle, mit einem Verteilorgan, das einen Verteilerbehälter für zugeführte Flüssigkeit mit einer Mehrzahl von Austrittsöffnungen für anschließbare Austragleitungen umfaßt, wobei der Verteilerbehälter ein durch Zwischenwände in mehrere voneinander getrennte, jeweils ein Drehkolbenpaar nach Art von Roots-Rotoren enthaltende Förderräume unterteiltes Gehäuse umfaßt und sämtliche Förderräume auf ihrer Flüssigkeitszuführseite miteinander in offener Verbindung stehen sowie auf ihrer Flüssigkeitsaustrittsseite jeweils mit einem gesonderten Auslaß versehen sind, dadurch gekennzeichnet, daß jeder gesonderte Auslaß der Förderräume (7) in zwei einzelne Auslaßkanäle (9,9') unterteilt ist, die jeweils einem der beiden zusammenwirkenden Drehkolben (3,3') des Drehkolbenpaares des zugehörigen Förderraums zugeordnet sind, und daß im Umlaufbetrieb des Drehkolbenpaares die beiden Auslaßkanäle (9,9') durch ihre zugehörigen, umlaufenden Drehkolben (3,3') abwechselnd jeweils vom Förderraum (7) abtrennbar und mit diesem verbindbar sind.

2. Vorrichtung nach Anspruch 1, dadurch gekennzeichnet, daß die Unterteilung jedes Auslasses von einem in der Symmetrieebene (25) des Drehkolbenpaares angeordneten Sperrkörper (8) zwischen den in gleichen Abständen beidseits der Symmetrieebene angeordneten Auslaßkanälen (9,9') gebildet ist.

3. Vorrichtung nach Anspruch 2, dadurch gekennzeichnet, daß die dem Förderraum (7) zugewandte Oberfläche des Sperrkörpers (8) die Form eines Zwickels aufweist, dessen Scheitellinie (12) in der Symmetrieebene (25) des Drehkolbenpaares angeordnet ist und dessen von der Scheitellinie (12) ausgehende Flächen (13) bogenförmig entsprechend den sich schneidenden Kopfkreislinien (26) der Drehkolben (3,3') ausgebildet sind.

4. Vorrichtung nach Anspruch 2 oder 3, dadurch gekennzeichnet, daß die in Achsrichtung des Drehkolbenpaares gemessene Länge des Sperrkörpers (8) gleich der axialen Länge der Drehkolben (3,3') ist.

5. Vorrichtung nach einem der Ansprüche 2 bis 4, dadurch gekennzeichnet, daß das von dem Sperrkörper (8) ausgefüllte Abstandsmaß zwischen den beiden Auslaßkanälen (9,9') höchstens so groß bemessen ist, daß in jedem Auslaßkanal ein freier Innendurchmesser von zumindest etwa 30 mm verbleibt.

6. Vorrichtung nach einem der Ansprüche 1 bis 5, dadurch gekennzeichnet, daß die Kopfflächen (16,16') der Drehkolben (3,3') bogenförmig entsprechend der bogenförmigen Innenkontur des Drehkolbengehäuses (1,1') ausgebildet sind.

7. Vorrichtung nach Anspruch 6, dadurch gekennzeichnet, daß die Bogenlänge der Kopffläche (16,16') so bemessen ist, daß bei einer 90°-Stellung der beiden Kolben (3,3') des Drehkolbenpaares der eine Auslaßkanal (z.B.9') in freier Strömungsverbindung mit dem Förderraum (7) steht, während der andere Auslaßkanal (z.B.9) von der jeweils angrenzenden Kopffläche (16) des ihm zugeordneten Drehkolbens (3) vollständig vom Förderraum (7) abgetrennt ist.

8. Vorrichtung nach Anspruch 6 oder 7, dadurch gekennzeichnet, daß die Bogenlänge der Kopffläche (16,16') etwa das Doppelte des Durchmessers jedes Auslaßkanals (9,9') beträgt.

9. Vorrichtung nach einem der Ansprüche 1 bis 8, dadurch gekennzeichnet, daß die Drehkolben (3,3') mit einem elastischen Mantel versehen sind.

10. Vorrichtung nach einem der Ansprüche 2 bis 9, dadurch gekennzeichnet, daß die Sperrkörper (8) jeweils an einem sich an die beiden Auslaßkanäle (9,9') jedes Auslasses anschließenden Doppelstutzen (10,10') befestigt sind.

## Claims

1. An apparatus for the distribution of non-homogeneous liquids, particularly liquid manure, with a distributing means which comprises a distributor tank for supplied fluid with a plurality of outlet orifices for connectable discharge lines, the distributor container comprising a housing sub-divided by partitions into a plurality of separate conveyor spaces containing in each case a pair of rotary pistons of the Roots rotor type, all the conveyor spaces communicating open with one another on their liquid feed side and being provided in each case with a separate outlet on their liquid discharge side, characterised in that each separate outlet from the conveyor spaces (7) is sub-divided into two individual outlet passages (9, 9') which are in each case associated with one of the two cooperating rotary pistons (3, 3') of the pair of rotary pistons of the associated conveyor space and in that while the pair of rotary pistons are rotating, the two outlet passages (9, 9') are capable of being alternately separated from and connected to the conveyor space (7) by their associated rotating pistons (3, 3').

2. An apparatus according to claim 1, characterised in that the sub-division of each outlet is formed by, disposed in the plane of symmetry (25) of the pair of rotary pistons, a locking member (8) between the outlet passages (9, 9') disposed at equal distances on either side of the plane of symmetry.

3. An apparatus according to claim 2, characterised in that the surface of the locking member (8) which is towards the conveyor space (7) takes the form of a wedge, of which the apex (12) is disposed in the plane of symmetry (25) of the pair of rotary pistons and of which the surfaces (13) emerging from the apex (12) are constructed arcuately according to the intersecting addenda (26) of the rotary pistons (3, 3').

4. An apparatus according to claim 2 or 3, characterised in that the length of the locking member (8) measured in the axial direction of the pair of rotary pistons is equal to the axial length of the rotary pistons (3, 3').

5. An apparatus according to one of claims 2 to 5, characterised in that the gap between the two outlet passages (9, 9') which is filled by the locking member (8) is at most of such a size that there remains in each outlet passage a clear inside diameter of at least about 30 mm.

6. An apparatus according to one of claims 1 to 5, characterised in that the head faces (16, 16') of the rotary pistons (3, 3') are arcuately formed according to the arcuate inner contours of the rotary piston housing (1, 1').

7. An apparatus according to claim 6, characterised in that the arc length of the head face (16, 16') is so dimensioned that at a 9Q° attitude of the two pistons (3, 3') of the pair of rotary pistons, one outlet passage (e.g. 9') is in a free flow communication with the conveyor space (7), while the other outlet passage (e.g. 9) of whichever is the adjacent head face (16) of its associated rotary piston (3) is completely separated from the conveyor space (7).

8. An apparatus according to claim 6 or 7, characterised in that the arc length of the head face (16, 16') amounts to about twice the diameter of each outlet passage (9, 9').

9. An apparatus according to one of claims 1 to 8, characterised in that the rotary pistons (3, 3') are provided with a resilient outer shell.

10. An apparatus according to one of claims 2 to 9, characterised in that the locking members (8) are in each case fixed on a double union (10, 10') adjacent each outlet.

## Revendications

1. Dispositif pour distribuer des liquides inhomogènes, en particulier du lisier, comportant un organe de distribution qui comprend une capacité distributrice pour du liquide d'alimentation présentant plusieurs orifices de sortie destinés à des conduites de débit pouvant y être raccordées, la capacité distributrice comportant un carter divisé par des cloisons en plusieurs chambres de refoulement séparées les unes des autres et contenant chacune une paire de pistons rotatifs du type des rotors de Roots et toutes les chambres de refoulement étant en communication ouverte les unes avec les autres du côté de leur alimentation en liquide et étant pourvues chacune d'une sortie séparée du côté de leur sortie de liquide, caractérisé en ce que chaque sortie séparée des chambres de refoulement (7) est divisée en deux canaux de sortie individuels (9, 9') qui sont chacun associés à un des deux pistons rotatifs coopérants (3, 3') de la paire de pistons rotatifs de la chambre de refoulement associée et que, lorsque la paire de piston rotatifs est en rotation, les deux canaux de sortie (9, 9') peuvent chacun, alternativement, être isolés de la chambre de refoulement (7) et être mis en communication avec celle-ci.

2. Dispositif suivant la revendication 1, caractérisé en ce que la division de chaque sortie est assurée par un élément d'arrêt (8) disposé dans le plan de symétrie (25) de la paire de pistons rotatifs, entre les canaux de sortie (9, 9') disposés à égale distance de part et d'autre du plan de symétrie.

3. Dispositif suivant la revendication 2, caractérisé en ce que la surface de l'élément d'arrêt (8) tournée vers la chambre de refoulement (7) a la forme d'un écoinçon dont la ligne de sommet (12) se situe dans le plan de symétrie (25) de la paire de pistons rotatifs et dont les faces (13) partant de la ligne de sommet (12) sont incurvées d'une manière correspondant aux cercles de têtes (26) des pistons rotatifs (3, 3') qui s'intersectent.

4. Dispositif suivant la revendication 2 ou 3, caractérisé en ce que la longueur de l'élément d'arrêt (8), mesurée dans le sens axial de la paire de pistons rotatifs, est égale à la longueur axiale des pistons rotatifs (3, 3').

5. Dispositif suivant l'une quelconque des revendications 2 à 4, caractérisé en ce que la distance entre les deux canaux de sortie (9, 9'), comblée par l'élément d'arrêt (8), est tout au plus d'une dimension telle que, dans chaque canal de sortie, subsiste un diamètre intérieur libre d'au moins 30 mm environ.

6. Dispositif suivant l'une quelconque des revendications 1 à 5, caractérisé en ce que les faces de tête (16, 16') des pistons rotatifs (3, 3') ont une configuration en arc de cercle correspondant au contour intérieur en arc de cercle du carter (1, 1') des pistons rotatifs.

7. Dispositif suivant la revendication 6, caractérisé en ce que la longueur d'arc de la face de tête (16, 16') est dimensionnée d'une manière telle que, dans le cas d'une position à 90° des deux pistons (3, 3') de la paire de pistons rotatifs, le premier canal de sortie (par exemple 9') soit en communication d'écoulement libre avec la chambre de refoulement (7), tandis que l'autre canal de sortie (par exemple 9) soit complètement isolé de la chambre de refoulement (7) par la face de tête (16) respectivement adjacente du piston rotatif (3) qui y est associé.

8. Dispositif suivant la revendication 6 ou 7, caractérisé en ce que la longueur de l'arc de la face de tête (16, 16') est environ égale au double du diamètre de chaque canal de sortie (9, 9').

9. Dispositif suivant l'une quelconque des revendications 1 à 8, caractérisé en ce que les pistons rotatifs (3, 3') sont pourvus d'une enveloppe élastique.

10. Dispositif suivant l'une quelconque des revendications 2 à 9, caractérisé en ce que les éléments d'arrêt (8) sont fixés, respectivement, à une double tubulure (10, 10') se raccordant aux deux canaux de sortie (9, 9') de chaque sortie.

Fig. 1

EP 0 283 755 B1

Fig. 2

Fig. 3

Fig. 4

EP 0 283 755 B1

Fig. 5

Fig. 6